# EUROPÄISCHE PATENTSCHRIFT

(11) **EP 1 390 779 B1**
(45) Veröffentlichungstag und Bekanntmachung des Hinweises auf die Patenterteilung: **08.06.2011**
(21) Anmeldenummer: 02740473.0
(22) Anmeldetag: 17.04.2002
(51) Int. Cl.: G01V 5/00

(54) **RÖNTGENANLAGE MIT EINER RÖNTGENSTRAHLQUELLE, EINER DETEKTORANORDNUNG UND EINER BLENDE**
X-RAY SYSTEM COMPRISING AN X-RAY SOURCE, A DETECTOR ASSEMBLY AND AN APERTURE
INSTALLATION DE RAYONNEMENT X DOTEE D'UNE SOURCE DE RAYONS X, D'UN DISPOSITIF DE DETECTION ET D'UN DIAPHRAGME

(30) Priorität: 08.05.2001 DE 10122279
(43) Veröffentlichungstag der Anmeldung: 25.02.2004
(73) Patentinhaber: Smiths Heimann GmbH, 65205 Wiesbaden (DE)
(72) Erfinder: STUDER, Wolfgang, 65366 Geisenheim (DE); KIRSTEN, Erwin, 55218 Ingelheim (DE)
(74) Vertreter: Thul, Hermann
(86) Internationale Anmeldenummer: PCT/EP2002/004225
(87) Internationale Veröffentlichungsnummer: WO 2002/091022

(56) Entgegenhaltungen:
- WO-A-00/33060
- DE-A- 19 532 965
- DE-A- 19 856 107
- DE-A- 19 940 403
- US-A- 6 031 890

## Beschreibung

Die Erfindung betrifft eine Röntgenanlage nach dem Oberbegriff des Patentanspruches 1.

### Stand der Technik

Eine Röntgenprüfanlage für großvolumige Objekte offenbart die DE 195 32 965 C2. Diese wird als selbstfahrende Einrichtung über das Objekt bewegt.

Bekannt sind des weiteren auch feststehende Röntgenprofanlagen, bei denen das großvolumige Prüfobjekt (Prüfgut) durchgeführt wird. Häufig handelt es sich bei dem Prüfobjekt um Lastkraftwagen und Lieferwagen (VAN) die durch das Silhouette-System mit einem eigenen Antrieb fahren. Die Zuschaltung und Abschaltung der Röntgenstrahlung erfolgt über ein vorzugsweise dreistufiges Lichtschrankensystem.

Nachteilig bei diesem System ist jedoch, dass die Zuschaltung der Röntgenstrahlung auf ein bekanntes längstes Fahrerhaus (Fahrzeugkabine) abgestimmt ist bzw. sein muß, so dass dies bei kürzeren Fahrerhäusern ein verspätetes Zuschalten der Röntgenstrahlung und dadurch eine nicht vollständige Erfassung der Ladung mit sich bringt.

Bei der Identifizierung und zur einfachen Positionsbestimmung von Objekten werden häufig dieses oder andere kontaktlose Systeme verwendet.

Bekannt ist so auch ein Verfahren und eine Vorrichtung zur kontaktlosen Positionsbestimmung und / oder Identifizierung eines Objektes, welches in der DE 199 40 403 A1 beschrieben ist. Hierbei wird neben einem Transpondersystem zusätzlich ein optischer Sensor eingesetzt, der das Objekt zusätzlich abtastet. Somit wird aus einer Kombination von durch den optischen Sensor erfaßten optischen Daten mit den erfaßten Transponder-Daten das Objekt identifiziert und / oder seine Position bestimmt. Diese optischen Daten können dabei in Form eines Barcodes am Objekt angebracht sein.

Die DE 198 56 107 A1 offenbart eine Einrichtung zum Kennzeichnen von Gepäckstücken, die aus berührungslos schreib- und lesbaren Datenträgern besteht, die sich an den Gepäckstücken befinden, um eine sichere Identifizierung zu gewährleisten.

Aus der US-A-6,031,890 ist eine Röntgenanlage der gattungsgemäßen Art bekannt, die eine Röntgenstrahlquelle zur Erzeugung einer Röntgenstrahlung, eine Detektoranordnung und eine Blende aufweist, welche die Röntgenstrahlung in Richtung Detektoranordnung passiert.

### Darstellung der Erfindung

Die Aufgabe der Erfindung besteht nun darin, eine Röntgenanlage insbesondere für großvolumige Objekte anzugeben, die objektabhängig und damit detektionsgenau arbeitet.

Gelöst wird die Aufgabe durch die Merkmale des Patentanspruches 1.

Der Erfindung liegt die Idee zugrunde, die Röntgenstrahlung einer Röntgenstrahlquelle mit Hilfe eines einfachen Barcodes zu- bzw. abzuschalten, der an einem zu prüfenden Objekt angebracht ist, wobei das Objekt in einem definierten Abstand zur Röntgenstrahlquelle an dieser vorbei geführt wird.

Bekanntlich wird die Röntgenstrahlung derartiger Röntgenquellen über eine Blende zugeschaltet. Deshalb ist es von Vorteil, wenn sich ein Barcodeleser in einer vorgegebenen Nähe zur Blende befindet, um das Zu- bzw. Abschalten der Röntgenstrahlung zu definieren.

In einer einfachen Ausführung wird der Barcode zur punkt- und damit detektionsgenauen Einschaltung der Röntgenstrahlung eingesetzt, während die Ausschaltung in bekannter Art und Weise mittels Lichtschranken erfolgen kann.

In einer weiteren Ausführung kann ein weiterer Barcode auch zum Abschalten der Röntgenstrahlung genutzt werden.

In Weiterführung der Erfindung wird der Barcode durch objektabhängige Daten gebildet.

Diese objektabhängigen Daten können u. a. den Fahrzeugpapieren entnommen sein und neben Fahrzeugtyp auch eine Fahrzeuglänge definieren, so dass in einer besonderen Logik der Datenverarbeitung durch die Kenntnis der Fahrzeuglänge ein Abschalten der Röntgenstrahlung erreicht werden kann. Aber auch bei der Bilderverwaltung etc. sind die objektabhängigen Daten nutzbar.

Vorzugsweise handelt es sich bei diesen Objekten um großvolumige Objekte, was beispielsweise Lastkraftwagen, Lieferwagen, Container usw. sein können. Dabei kann die Röntgenanlage selbst mobil als auch stationär ausgeführt sein.

Der Vorteil der Verwendung eines Barcodes zur Steuerung der Röntgenstrahlung liegt u. a. darin, dass die Prüfung unabhängig von der Fahrerhauslänge, vom LKW-Typ usw. ist. Des weiteren kann durch den Barcode eine zielgerichtete Durchleuchtung in Teilbereichen eines Objektes vorgenommen werden, wenn beispielsweise nur dieser Teilbereich von Interesse ist.

### Kurze Beschreibung der Zeichnung

Anhand eines Ausführungsbeispieles mit Zeichnung soll die Erfindung näher erläutert werden. Der Fachmann wird die einzelnen Merkmale der Beschreibung, den Ansprüchen sowie den Figuren entnehmen und zu weiteren sinnvollen Kombinationen zusammenfügen.

Es zeigt:
- Figur 1: eine verkleinert dargestellte Röntgenanlage,
- Figur 2: ein kleines Fahrzeug ohne abgetrennte Fahrzeugkabine,
- Figur 3: ein größeres Fahrzeug mit abgetrennter Fahrzeugkabine,
- Figur 4: eine weitere Variante aus Figur 3.

### Wege zur Ausführung der Erfindung

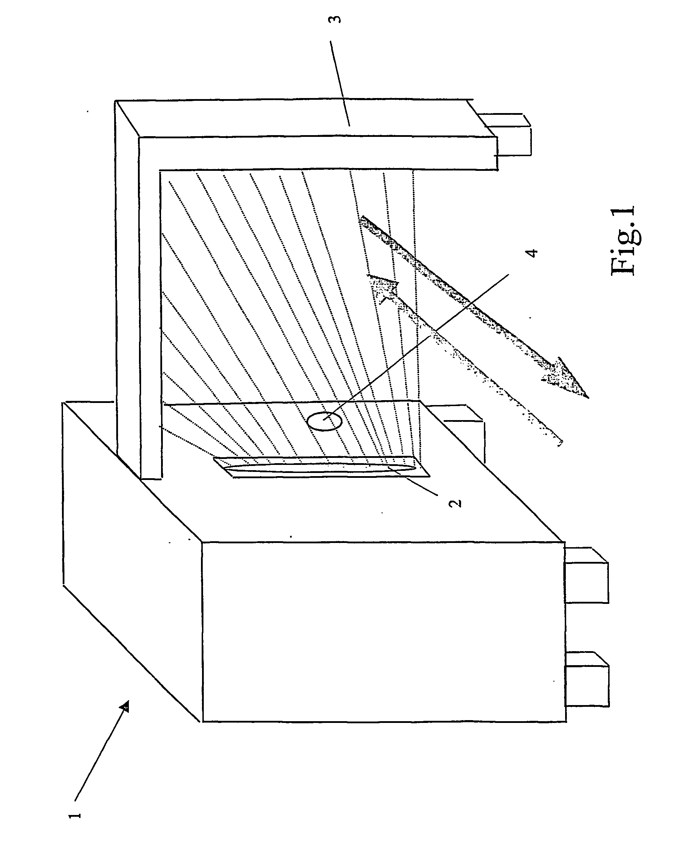

In Figur 1 ist eine bekannte Röntgenanlage 1 zur Kontrolle hier von großvolumigen Objekten 5,6, wie beispielsweise Fahrzeugen, Container usw., leicht stilisiert dargestellt, wobei nur die für die Erfindung wesentlichen Teile dargestellt worden sind.

In der Röntgenanlage 1 befindet sich, vorzugsweise eine nicht näher dargestellte Röntgenstrahlquelle, von der wenigstens eine Röntgenstrahlung FX ausgeblendet und durch eine Blende 2 an der Röntgenanlage 1 zur Dauer der Durchleuchtung des Objektes ausgestrahlt wird. Diese Strahlung FX trifft in bekannter Art und Weise auf eine Detektoranordnung 3, die hier in Form einer Detektorzeile ausgeführt ist. In vorzugsweise unmittelbarer Nähe zur Blende 2 ist ein Barcodeleser 4 in bzw. an der Röntgenanlage 1 installiert.

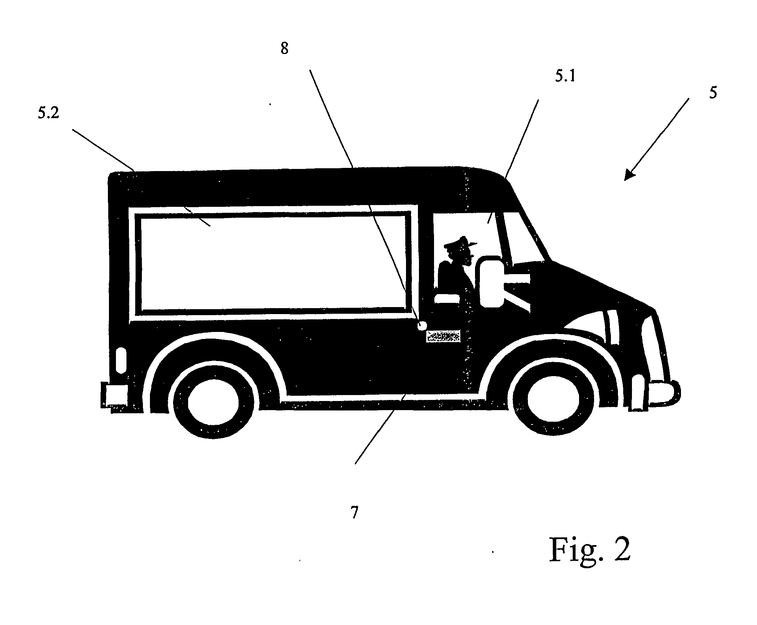

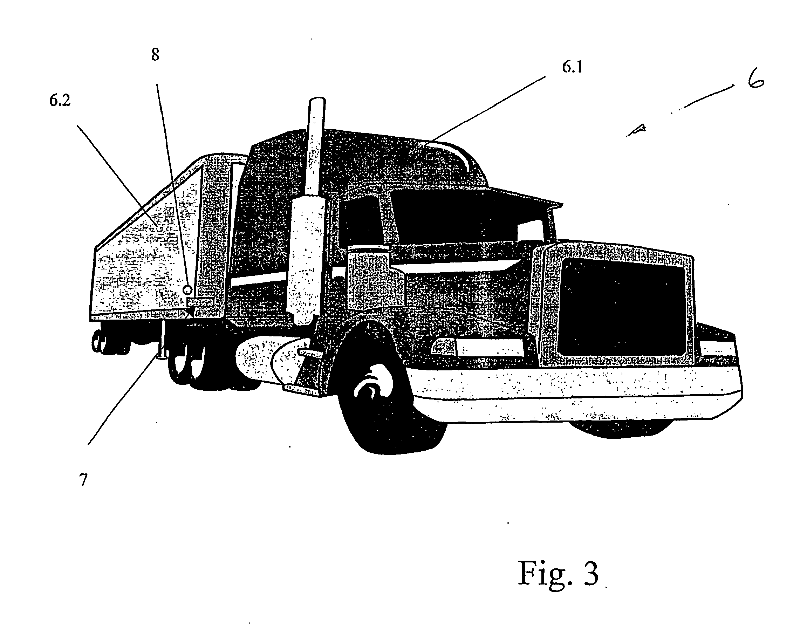

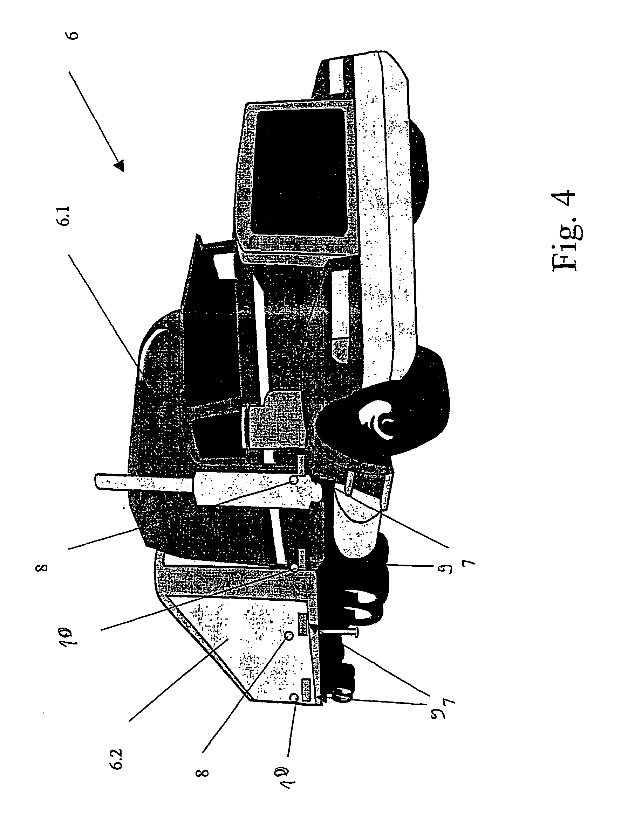

Figur 2 und Figur 3 geben zwei unterschiedliche zu durchleuchtende Objekte 5, 6 wieder, wobei das Objekt 5 nach Figur 2 kein von an der Ladefläche Figur 5.2 abgetrenntes Fahrerhaus 5.1 aufweist, während das Objekt 6 in Figur 3 und in Figur 4 neben einer Ladefläche 6.2 auch ein von dieser Ladefläche 6.2 abgetrenntes Führerhaus 6.1 besitzt.

Nach der erfinderischen Idee ist nun an den Objekten 5, 6 jeweils ein Barcode 7 angebracht. Passiert das Objekt 5 den Barcodeleser 4, identifiziert dieser anhand des Barcodes 7, der vor einem Prüfanfang 8 des Ladebereiches 5.2 angebracht ist, dass die Röntgenstrahlung FX durch Öffnen der Blende 2 zuzuschalten ist.

Wie der Figur 3 entnehmbar ist, befindet sich der Barcode 7 am Objekt 6 im Gegensatz zum Objekt 5 nicht an der Fahrzeugkabine, sondern am Ladebereich 6.2, mit dem auch hierbei ein Zuschalten der Röntgenstrahlung FX am Prüfanfang 8 definiert wird.

In beiden Fällen kann die Abschaltung der Röntgenstrahlung in bekannter Art und Weise durch ein hier nicht näher dargestelltes Lichtschrankensystem erfolgen.

Figur 4 zeigt eine Weiterführung aus Figur 3. Hierbei definiert der Barcode 7 einen Prüfanfang 8 und ein Barcode 9 ein Prüfende 10. Dabei kann auch ein Teil der Fahrerkabine 6.1, in dem sich der Fahrer nicht aufhält, mitgeprüft werden.

Weitere großvolumige Objekte, die mit Hilfe dieser Röntgenanlage 1 geprüft werden können, sind dabei auch Container oder ähnliche Objekte, wobei dann die in Figur 1 stationär dargestellte Röntgenanlage 1 auch als selbstfahrende Röntgenanlage ausgeführt sein kann.

Durch die vorgeschlagene Lösung ist es möglich, auch Objekte 5, 6 mit unterschiedlichen Formen und Abmaßen, beispielsweise bedingt durch die unterschiedlich langen Fahrerkabinen 5.1, 6.1 und unterschiedlich langen Ladeflächen 5.2, 6.2, punktgenau durchleuchten zu können, wozu der Barcode 7 wahlweise am Objekt 5, 6 angebracht ist. Der Barcode 7 kann mittel einer Magnetplatte oder einem Aufkleber am Objekt 5, 6 angebracht sein. Der Abstand zwischen dem Barcodeleser 4 und der Blende 2 bestimmt dabei den Anbringungsort des Barcodes 7 am Objekt 5, 6 , d.h. den Abstand des am Objekt 5, 6 anzubringenden Barcode 7 zum Prüfanfang 8 bzw. zum Prüfende 9 des Objektes 5, 6.

## Patentansprüche

1. Röntgenanlage, aufweisend zumindest eine Röntgenstrahlquelle zur Erzeugung wenigstens einer Röntgenstrahlung, wenigstens eine Detektoranordnung, sowie wenigstens eine Blende, welche die Röntgenstrahlung in Richtung Detektoranordnung passiert, **dadurch gekennzeichnet, dass**
- in einer vorgegebenen Nähe zur Blende (2) ein Barcodeleser (4) angebracht ist, welches
- einen Barcode (7) an einem an der Blende (2) entlang geführten Objektes (5,6) erkennt, wodurch
- erst nach Erkennung des Barcodes (7) die Blende (2) geöffnet und/oder geschlossen wird.

2. Röntgenanlage nach Anspruch 1, **dadurch gekennzeichnet, dass** das Öffnen oder Schließen der Blende (3) durch einen definierten Prüfanfang (8) oder ein definiertes Prüfende (9) des an der Blende (2) vorbei geführten Objekt (5,6) ausgelöst wird.

3. Röntgenanlage nach Anspruch 2, **dadurch gekennzeichnet, dass** der Barcode (7) die Information über einen punktgenauen Prüfanfang. (8) oder ein punktgenaues Prüfende (9) oder beides besitzt.

4. Röntgenanlage nach einem der Ansprüche 1 bis 3, **dadurch gekennzeichnet, dass** der Barcode (7) zusätzlich Informationen über das Objekt (5,6) als objektabhängige Daten enthält.

5. Röntgenanlage nach Anspruch 4, **dadurch gekennzeichnet, dass** diese Informationen zur späteren Datenverarbeitung herangezogen werden können.

6. Röntgenanlage nach Anspruch 4, **dadurch gekennzeichnet, dass** diese Informationen beim Öffnen oder Schließen der Blende (3) zur Zu- und/oder Abschaltung der wenigstens einen Röntgenstrahlung (FX) herangezogen werden können.

7. Röntgenanlage nach einem der vorgenannten Ansprüche 1 bis 6, **dadurch gekennzeichnet, dass** das Objekt (5,6) in einem Abstand von bis zu 1.50 m zum Barcodeleser (4) der Röntgenanlage (1) vorbei geführt werden kann.

8. Röntgenanlage nach einem der Ansprüche 1 bis 7, **dadurch gekennzeichnet, dass** der Abstand zwischen dem Barcodeleser (4) und der Blende (2) den Abstand zwischen dem am Objekt (5,6) anzubringenden Barcode (7) und dem Prüfanfang (8) bzw. dem Prüfende (9) des Objektes (5,6) bestimmt.

9. Röntgenanlage nach einem der Ansprüche 1 bis 8, **dadurch gekennzeichnet, dass** der Barcode (7) mittel einer Magnetplatte oder einem Aufkleber am Objekt (5, 6) angebracht ist.

10. Röntgenanlage nach einem der vorgenannten Ansprüche 1 bis 9, **dadurch gekennzeichnet, dass** die Objekte (5,6) großvolumig sind.

11. Röntgenanlage Anspruch 10, **dadurch gekennzeichnet, dass** die Objekte (5,6) Fahrzeuge mit unterschiedlich langen Fahrerkabinen (5.2, 6.2) und Ladeflächen (5.1, 6.1) sind, an denen der Barcode (7) wahlweise angebracht ist.

12. Röntgenanlage nach Anspruch 10, **dadurch gekennzeichnet, dass** das zu prüfende Objekt ein Container ist.

## Claims

1. X-ray installation, having at least one x-ray radiation source for generating at least one x-ray radiation, at least one detector configuration, as well as at least one screen, which the x-ray radiation passes in the direction of the detector configuration, **characterized in that**
- a barcode reader (4) is attached in a predefined proximity to the screen (2), which
- recognizes a barcode (7) on an object (5, 6) guided along the screen (2), whereby
- the screen (2) is opened and/or closed only after recognizing the barcode (7).

2. X-ray installation according to Claim 1, **characterized in that** the opening or closing of the screen (3) is triggered by a defined inspection beginning (8) or a defined inspection end (9) of the object (5, 6) guided past the screen (2).

3. X-ray installation according to Claim 2, **characterized in that** the barcode (7) has the information about a pinpoint inspection beginning (8) or a pinpoint inspection end (9) or both.

4. X-ray installation according to one of Claims 1 to 3, **characterized in that** the barcode (7) additionally contains information about the object (5, 6) as object-dependent data.

5. X-ray installation according to Claim 4, **characterized in that** this information can be used for later data processing.

6. X-ray installation according to Claim 4, **characterized in that** this information can be used in the case of opening or closing of the screen (3) for turning on and off the at least one x-ray radiation (FX).

7. X-ray installation according to one of preceding Claims 1 to 6, **characterized in that** the object (5, 6) can be guided past the x-ray installation (1) at a spacing of up to 1.50 m to the barcode reader (4).

8. X-ray installation according to one of Claims 1 to 7, **characterized in that** the spacing between the barcode reader (4) and the screen (2) determines the spacing between the barcode (7) to be attached to the object (5, 6) and the inspection beginning (8) or the inspection end (9) of the object (5, 6).

9. X-ray installation according to one of Claims 1 to 8, **characterized in that** the barcode (7) is attached to the object (5, 6) using a magnetic plate or a sticker.

10. X-ray installation according to one of preceding Claims 1 to 9, **characterized in that** the objects (5, 6) are large-volume.

11. X-ray installation according to Claim 10, **characterized in that** the objects (5, 6) are vehicles having tabs (5.2, 6.2) and cargo surfaces (5.1, 6.1) of different lengths, to which the barcode (7) is alternately attached.

12. X-ray installation according to Claim 10, **characterized in that** the object to be inspected is a container.

## Revendications

1. Installation de rayons X comportant au moins une source de rayons X pour générer au moins un rayonnement X, au moins un dispositif de détection ainsi qu'au moins un diaphragme laissant passer le rayonnement X en direction du dispositif de détection, **caractérisée en ce que**
- un lecteur de code-barres (4) est fixé à une distance définie près du diaphragme (2),
- celui-ci reconnait un code-barres (7) sur un objet (5, 6) déplacé le long du diaphragme (2),
- le diaphragme (2) n'étant ainsi ouvert et/ou fermé qu'après la reconnaissance du code-barres (7).

2. Installation de rayons X selon la revendication 1, **caractérisée en ce que** l'ouverture ou la fermeture du diaphragme (3) est déclenchée par un début d'examen défini (8) ou par une fin d'examen définie (9) de l'objet (5, 6) déplacé devant le diaphragme (2).

3. Installation de rayons X selon la revendication 2, **caractérisée en ce que** le code-barres (7) possède l'information concernant un point précis de début d'examen (8) ou un point précis de fin d'examen (9) ou les deux.

4. Installation de rayons X selon une des revendications 1 à 3, **caractérisée en ce que** le code-barres (7) contient de plus des informations concernant l'objet (5, 6) sous la forme de données liées à l'objet.

5. Installation de rayons X selon la revendication 4, **caractérisée en ce que** ces informations peuvent être utilisées pour le traitement ultérieur des données.

6. Installation de rayons X selon la revendication 4, **caractérisée en ce que** ces informations peuvent être utilisées lors de l'ouverture ou de la fermeture du diaphragme (3) pour le mise en route et/ou l'arrêt d'au moins un rayonnement (FX).

7. Installation de rayons X selon une des revendications précédentes 1 à 6, **caractérisée en ce que** l'objet (5, 6) peut être déplacé devant l'installation de rayons X (1) à une distance du lecteur de code-barres (4) pouvant aller jusqu'à 1,50 m

8. Installation de rayons X selon une des revendications 1 à 7, **caractérisée en ce que** la distance entre le lecteur de code-barres (4) et le diaphragme (2) détermine la distance entre le code-barres (7) à fixer sur l'objet (5, 6) et le début de l'examen (8) respectivement la fin de l'examen (9) de l'objet (5, 6).

9. Installation de rayons X selon une des revendications 1 à 8, **caractérisée en ce que** le code-barres (7) est fixé sur l'objet (5, 6) au moyen d'une plaque magnétique ou d'un autocollant.

10. Installation de rayons X selon une des revendications 1 à 9, **caractérisée en ce que** les objets (5, 6) sont de gros volumes.

11. Installation de rayons X selon la revendication 10, **caractérisée en ce que** les objets (5, 6) sont des véhicules avec des cabines de conducteur (5.2, 6.2) et des surfaces de chargement (5.1, 6.1) de différentes longueurs, sur lesquelles le code-barres (7) est fixé au choix.

12. Installation de rayons X selon la revendication 10, **caractérisée en ce que** l'objet à examiner est un conteneur.
